Europäisches Patentamt

European Patent Office

Office européen des brevets

(19)

(11) Publication number: **0 420 781 A2**

# (12) EUROPEAN PATENT APPLICATION

(21) Application number: 90500089.9

(51) Int. Cl.⁵: **B22C 3/00**, C04B 41/85

(22) Date of filing: **07.09.90**

A request for correction of typing errors in the description and the claims has been filed pursuant to Rule 88 EPC. A decision on the request will be taken during the proceedings before the Examining Division (Guidelines for Examination in the EPO, A-V, 2.2).

(30) Priority: **08.09.89 ES 8903067**
**05.07.90 ES 9001847**

(43) Date of publication of application:
**03.04.91 Bulletin 91/14**

(84) Designated Contracting States:
**AT BE CH DE DK ES FR GB GR IT LI LU NL SE**

(71) Applicant: **BOSTLAN, S.A.**
**33-Bo Trobika**
**E-48100 Mungia (Bizkaia)(ES)**

(72) Inventor: **Aza Pendas, Salvador**
**51 Pardo Bazán St.**
**E-28016 Madrid(ES)**
Inventor: **Moya Corral, José**
**2 Fernández Shaw St.**
**E-28007 Madrid(ES)**

(74) Representative: **Lopez Medrano, Santiago**
**40 Gran Via St.**
**E-28013 Madrid(ES)**

(54) **Refractory paint for covering foundry moulds.**

(57) Refractory paint for coating foundry moulds or forms, in which an inorganic refractory load in the form of powder is used as pigment. This pigment might be a refractory bauxite which is roast, preferably, or semi-roast, or a mixture of both, and high alumina aggregates can also be used in the proportion of 95 - 70% $Al_2O_3$ and 5 - 30% $SiO_2$.

EP 0 420 781 A2

The patent refers to refractory paints of the type of those which are used to cover or coat the sand in foundry moulds or forms before casting.

Until the present time, refractory paints for these applications have been known, in which zirconium silicate, hereafter in the specification referred to as zircon for greater clarity, is used as pigment. This type of coating has been one of the most used up to now, although recently, due to the cost of zircon, its use is becoming prohibitive, which is obliging all manufacturers to search for substitute pigments, improving if possible the characteristics and properties.

From among these properties, there are two which are important for a coating of this type. One of them is that cracks should not be formed during the application of the paint onto the sand, and the other is the covering power or performance, that is, the sand surface coated with an average thickness per weight unit of paint.

In general terms, zircon-based paints basically fulfil the first property although only in a sufficient way and obviously capable of being improved. In the same way, the performance is also improvable.

However, zircon-based paints cannot be used to coat foundry moulds or forms destined for casting manganese steel parts. In this case, due to its high silica (silicon dioxide) content, a reaction takes place in the steel which leads to the formation of $MnO_2$ and other volatile elements at the casting temperature, such as Si and $SiO_2$ which alter the surface condition of the finished parts. This reaction is as follows:

$Mn + SiO_2 \rightarrow MnO_2 + Si + SiO$, in which the silicon and the silicon monoxide are the volatile elements which have been referred to.

This patent claims a refractory paint which uses certain characteristic pigments, thanks to whose assistance the following objectives are achieved:

- Total elimination of any possibility of cracks being formed during the application of the paint.
- Increase in yield or efficiency, that is a greater covering or coating power for an equal weight of paint.
- Considerable reduction in the price of the refractory paint.
- Possibility of using refractory paint in all applications, including for manganese steels.

To achieve these objectives, the patent uses the assistance, preferably, of a specific pigment obtained by roasting refractory bauxites, with the said pigment conforms with the following composition:

- Loss of weight by roasting at 1100°C ; 0 - 35%
- Silica ($SiO_2$) ; 3 - 13%
- Alumina ($Al_2O_3$) ; 70 - 90%
- Titanium ($TiO_2$) ; 0 - 6%
- Hematite ($Fe_2O_3$) ; 0 - 4.5%
- Calcium (CaO) ; < 2%
- Magnesium (MgO) ; < 1.5%
- Sodium Oxide ($Na_2O$) ; < 1%
- Potasssium Oxide ($K_2O$) ; < 1%

The percentages of the oxides, in weight percentages of the total, refer to roasted material.

The pigment in question includes a percentage of carbon and/or graphite of up to 30%, so that during the process of pouring or casting the molten metal into the moulds or forms, where there has to be more of a reducer atmosphere, the said particles of carbon which are present in the pain remain throughout the process, thus preventing the molten metal from penetrating into the mould through the pores. The average size of the said carbon and/or graphite is smaller than 5 microns, because of which it has a high covering capacity.

On the other hand, as a result of analysing the crust obtained on the surface of a cast part, it has been possible to appreciate that a very fine layer of glass coats the grains of quartz of the mold, filling in the interstices which are left by the grains and thus preventing the molten metal from penetrating.

This behaviour is similar to that shown by paints which contain zircon as their refractory load. However, it happens that in those cases where the refractory load is zircon, the covering capacity is much lower and consequently a thicker crust is obtained, approximately 50% thicker than what is obtained with paints manufactured with the inorganic load which is the object of this patent. It is therefore obvious that fewer litres of paint per square metre of coated mould will be needed than in the traditional case of the zircon-based load.

The inorganic load used for the refractory paint can be roasted or calcined, preferably, as has been described up to now, but a semi-roast inorganic load or mixtures of both can also be used with identical final results, with it being possible to add a percentage of carbon and/or graphite of between 0% and 30% of the total weight of the load.

The semi-roast or roast inorganic load, or the mixture of both, itself contains the carbon and/or graphite in the form of carbonaceous particles of between 0% and 30% of the total weight of the load.

From the different tests carried out, it has been established that the loads, whether roasted or semi-roasted, can be combined in the composition of the refractory paints with identical practical results.

The refractory paint will obviously include other components, such as resins, binders, different loads and, obviously, water and suitable thinners. On occasions the water might also act as the only thinner in the whole.

Acceptable practical results are obtained with an inorganic load of at least 10% in weight of the total for the refractory paint and a maximum of 90%, with the normal percentage being between 55 and 75% in weight. However, the best results are obtained when this percentage is around 65%

This ideal percentage of 65% must be considered as referring to the whole of the inorganic load, whether this be semi-roast, roast or a mixture of roast and semi-roast, with or without the addition of carbon and/or graphite.

As an example and in the specific case of a mixture of semi-roast load with roast load 45% in weight of the former is combined with 20% in weight of the latter.

The patent also proposes and claims the use as pigment of an inorganic refractory load in the form of powder with an average grain size of less than 100 microns. The load can be formulated as a high alumina aggregate basically made up of a mixture of $\alpha$ or $\gamma$ Alumina and Mullite in the proportion of 95 - 70% $Al_2O_3$ and 5 ÷ 30% $SiO_2$.

This aggregate can be formulated by direct mixing in the proportions indicated of:

A).- $\alpha$ or $\gamma$ $Al_2O_3$ and Kaolin roasted at more than 500$_\circ$C.

B).- Andalusite, Silimanite and/or Cyanite and $\alpha$ or $\gamma$ $Al_2O_3$.

C).- $\alpha$ or $\gamma$ $Al_2O_3$ and Pyrophilite roasted at more than 500$_\circ$C.

D).- Refractory grade bauxite

$$(Al_2O_3 \geq 71\% \text{ and } Fe_2O_3 \leq 5\%),$$

diasporic or gibbsitic, roasted at more than 900$_\circ$C and with or without additions of the aluminic silicates which are mentioned in A), B) or C), and/or crystalline or colloidal silica.

## Claims

1st.- REFRACTORY PAINT FOR COVERING FOUNDRY MOULDS, which contain thinners, resins, water, binders and various loads, which is essentially characterized because as pigment is used an inorganic refractory load of the type of the refractory bauxites roasted at more than 900$_\circ$C., with a content of carbonaceous particles, in that this load is included in the paint in a percentage of between 55 and 75% in weight of the total for the paint, in that the chemical composition of the inorganic refractory load oscillates between the following limits:

- Loss of weight by roasting at 1100$_\circ$C : 0 - 35 %
- Silica ($SiO_2$) : 3 - 13 %
- Alumina ($Al_2O_3$) : 70 - 90 %
- Titanium ($TiO_2$) : 0 - 6 %
- Hematite ($Fe_2O_3$) : 0 - 4.5%
- Calcium (CaO) : < 2 %
- Magnesium (MgO) : < 1.5%
- Sodium Oxide ($Na_2O$) : < 1 %
- Potasssium Oxide ($K_2O$) : < 1 %

and in that the percentages of the different oxides refer to roasted (calcined) material.

2nd.- REFRACTORY PAINT FOR COVERING FOUNDRY MOULDS, in accordance with the 1st claim, characterized because the percentage of pigment of organic load in the paint is 65% of the total weight of the paint.

3rd.- REFRACTORY PAINT FOR COVERING FOUNDRY MOULDS, in accordance with the 1st claim, characterized because the pigment of organic load is composed of 45% in weight of a semi-roast part and 20% in weight of a roast part.

4th.- REFRACTORY PAINT FOR COVERING FOUNDRY MOULDS, in accordance with the 1st claim, characterized because the pigment of inorganic load is composed of 65% in weight of semi-roast load.

5th.- REFRACTORY PAINT FOR COVERING FOUNDRY MOULDS, in accordance with the 1st claim, characterized because the pigment of inorganic load is composed of 65% in weight of roast load.

6th.- REFRACTORY PAINT FOR COVERING FOUNDRY MOULDS, in accordance with the 1st claim, characterized because the pigment of organic load is present with at least 10% and up to 90% in weight of the total of refractory pigment in the paint.

7th.- REFRACTORY PAINT FOR COVERING FOUNDRY MOULDS, in accordance with the 3rd and 5th claims, characterized because a quantity of carbon or its different crystalline forms is incorporated into the paint, in a proportion of 30% in weight at the most.

8th.- REFRACTORY PAINT FOR COVERING FOUNDRY MOULDS, which includes thinners, resin, water, binders and various loads, which is characterized because as pigment is used an inorganic refractory load in the form of powder with an average grain size of less than 100 microns, in which the load is a high alumina aggregate basically made up of a mixture of $\alpha$ or $\gamma$ Alumina and Mullite in the proportion of 95 - 70% $Al_2O_3$ and 5 - 30% $SiO_2$.

9th.- REFRACTORY PAINT FOR COVERING FOUNDRY MOULDS, in accordance with the 8th claim, characterized because the load is formulated by a direct mixture in the proportions indicated of $\alpha$ or $\gamma$ $Al_2O_3$ and kaolin roast at more than 500$\underline{o}$C.

10th.- REFRACTORY PAINT FOR COVERING FOUNDRY MOULDS, in accordance with the 8th claim, characterized because the load is formulated by a direct mixture of Andalucite and $\alpha$ or $\gamma Al_2O_3$.

11th.- REFRACTORY PAINT FOR COVERING FOUNDRY MOULDS, in accordance with the 8th claim, characterized because the load is formulated by a direct mixture of Silimanite and $\alpha$ or $\gamma$ $Al_2O_3$.

12th.-REFRACTORY PAINT FOR COVERING FOUNDRY MOULDS, in accordance with the 8th claim, characterized because the load is formulated by a direct mixture of Cyanite and $\alpha$ or $\gamma$ $Al_2O_3$.

13th.-REFRACTORY PAINT FOR COVERING FOUNDRY MOULDS, in accordance with the 8th claim, characterized because the load is formulated by a direct mixture of Pyrophilite roasted at more than 500$\underline{o}$C. and $\alpha$ or $\gamma$ $Al_2O_3$.

14th.- REFRACTORY PAINT FOR COVERING FOUNDRY MOULDS, in accordance with the 8th claim, characterized because the load is a bauxite of refractory grade

$$Al_2O_3 \gtrsim 71\% \text{ and } Fe_2O_3 \lesssim 5\%$$

diasporic and gibbsitic, roasted at more than 900$\underline{o}$C. and with crystalline or colloidal silica.

15th.- REFRACTORY PAINT FOR COVERING FOUNDRY MOULDS, in accordance with the 8th claim, characterized because the load of refractory grade bauxite can be combined with one or various of the aluminic silicated named in claims 8 to 13.

4